# EUROPÄISCHE PATENTSCHRIFT

(11) **EP 2 235 917 B1**
(45) Veröffentlichungstag und Bekanntmachung des Hinweises auf die Patenterteilung: **08.07.2015**
(21) Anmeldenummer: 09702747.8
(22) Anmeldetag: 15.01.2009
(51) Int. Cl.: H04W 4/00, H04L 29/08, H04W 88/02

(54) **PORTABLER DATENTRÄGER MIT CAT-INTERPRETER**
PORTABLE DATA CARRIER COMPRISING A CAT INTERPRETER
SUPPORT DE DONNÉES PORTATIF COMPRENANT UN INTERPRÉTEUR CAT

(30) Priorität: 16.01.2008 DE 102008004693
(43) Veröffentlichungstag der Anmeldung: 06.10.2010
(73) Patentinhaber: Giesecke & Devrient GmbH, 81677 München (DE)
(72) Erfinder: RICHTER, Oliver, 81735 München (DE); SPITZ, Stephan, 81247 München (DE); CHEN, Hao, 81667 München (DE)
(86) Internationale Anmeldenummer: PCT/EP2009/000224
(87) Internationale Veröffentlichungsnummer: WO 2009/090070

(56) Entgegenhaltungen:
- EP-A- 1 608 123
- EP-A- 1 691 536
- WO-A-2004/059562
- GUTHERY S ET AL: "The WebSIM - Clever Smartcards Listen to Port 80" INTERNET CITATION, [Online] XP002461126 Gefunden im Internet: URL:http://citeseer.ist.psu.edu/cache/pape rs/cs/15868/http:zSzzSzzSzwww.s cdk.comzSzwebsim.pdf/guthery99websim.pdf> [gefunden am 1999-12-15]

## Beschreibung

Die vorliegende Erfindung betrifft ein Verfahren zum Ausführen von CAT-Kommandos auf einem portablen Datenträger sowie einen entsprechenden Datenträger.

CAT-Kommandos ("Card Application Toolkit Kommandos") stellen eine Sammlung vom Kommandos dar, die die Funktionalität von portablen Datenträgern, insbesondere von (U)SIM-Mobilfunkkarten, erweitern. Die CAT-Kommandos sind durch das ETSI, das Europäische Institut für Telekommunikationsnormen, in der Spezifikation TS 102 223 festgelegt. Es handelt sich dabei um Kommandos der (U)SIM-Mobilfunkkarte an das Telekommunikationsendgerät, mit denen das Telekommunikationsendgerät und dessen Komponenten, z.B. das Display, die Tastatur und dergleichen, direkt angesprochen bzw. abgefragt werden können. Mittels CAT-Kommandos wird darüber hinaus auch das Senden von Nachrichten ermöglicht, z.B. von SMS-Nachrichten, oder das Aufbauen einer Sprachverbindung durch die (U)SIM-Mobilfunkkarte. Solche Kommandos werden auch proaktive Kommandos genannt, da sie von der (U)SIM-Mobilfunkkarte selbstständig ausgeführt werden können.

Zum Ausführen eines proaktiven Kommandos muss deshalb die übliche Master/-Slave-Beziehung zwischen dem Telekommunikationsendgerät und der (U)SIM-Mobilfunkkarte umgekehrt werden. Für Kommandos des auf gewöhnlichen (U)SIM-Mobilfunkkarten implementierten "SIM Application Toolkit", welche eine Untermenge derjenigen des "Card Application Toolkit" darstellen, sendet das Telekommunikationsendgerät beispielsweise in regelmäßigen Abständen eine Anfrage an die (U)SIM-Mobilfunkkarte, ob ein SIM Application Toolkit Kommando zur Abarbeitung vorliegt. Diese Vorgehensweise wird "Polling" genannt.

Moderne (U)SIM-Mobilfunkkarten verfügen häufig über eine Webserverapplikation ("SCWS", Smart Card Web Server). Diese ist eingerichtet, einem Webbrowser des Telekommunikationsendgeräts auf Anfrage Inhalte, die in der Mobilfunkkarte in Form von HTML-Dokumenten gespeichert sind, bereitzustellen. Auf diese Weise wird es möglich, Anwendungen, die vollständig auf der Mobilfunkkarte implementiert sind, wie z.B. eine Telefonbuchanwendung, einem Nutzer des Telekommunikationsendgerätes in der ihm aus dem Internet vertrauten und leicht zu bedienenden Weise in Form von HTML-Seiten zu präsentieren. Des Weiteren kann die entsprechende Anwendung zusammen mit der Mobilfunkkarte einfach auf ein anderes Telekommunikationsendgerät übertragen werden, solange dort ein Webbrowser zur Verfügung steht.

Derartige Anwendungen, wie z.B. die vorstehend genannte Telefonbuchanwendung, die teilweise auf CAT-Kommandos zurückgreifen, müssen daher einen Mechanismus unterstützen, der entsprechende CAT-Kommandos auf der Mobilfunkkarte aktiviert, wenn z.B. aufgrund einer Aktion des Nutzers des Telekommunikationsendgeräts, beispielsweise dem Auswählen einer Nummer aus dem als HTML-Dokument dargestellten Telefonbuch durch Anklicken derselben, das entsprechende CAT-Kommando zum Aufbauen einer Verbindung zu der angegebenen Nummer auszuführen ist.

Die WO 2006/085201 A1 löst dieses Problem dadurch, dass der Telefonbucheintrag einen Verweis auf ein auf der Mobilfunkkarte gespeichertes und auf einem Prozessor der Mobilfunkkarte ausführbares Java-Servlet umfasst, wobei ein Anklicken des Eintrags das Servlet aktiviert, welches seinerseits das Ausführen des entsprechenden CAT-Kommandos zum Anwählen der zu dem Telefonbucheintrag gehörenden Nummer auslöst.

In der WO 2007/105084 A1 ist eine als Applet implementierte Applikation beschrieben, die SIM Toolkit Kommandos und deren Abhängigkeit untereinander für einen Nutzer eines Telekommunikationsendgeräts darstellbar macht. Die Applikation übersetzt dazu die einzelnen SIM Toolkit Kommandos in entsprechende HTML-Seiten. Diese werden dem Nutzer angezeigt und können entsprechend der Abhängigkeiten der SIM Toolkit Kommandos untereinander mittels der von HTML-Seiten bekannten Navigation durchlaufen werden. Die Angabe, welches der wie vorstehend beschrieben dargestellten Kommandos aufgerufen werden soll, wird durch eine HTTP-Anfrage an die Applikation gesendet, die ein Ausführen des entsprechenden Kommandos veranlasst.

Eine ähnliche Lösung zeigt EP 1691536 A1. Verschiedene Smart Card Web Server werden beschrieben in WO 2004/059562 A2, EP 1608123 A1 und dem Artikel "The WebSIM - Clever Smartcards Listen to Port 80" von Guthery und Posegga.

Zur Unterstützung einer Interaktion zwischen einer Webserverapplikation, die auf der (U)SIM-Mobilfunkkarte HTML-Inhalte zur Verfügung stellt, und einem CAT-Interpreter zum Ausführen von CAT-Kommandos auf der (U)SIM-Mobilfunkkarte wird im Stand der Technik also stets auf eine zumeist auf Basis der Programmiersprache Java implementierte Applikation zurückgegriffen. Dies erfordert eine entsprechende Java-Laufzeitumgebung auf der (U)SIM-Mobilfunkkarte, welche beträchtliche Ressourcenanforderungen an die (U)SIM-Mobilfunkkarte stellt, und verlangsamt im Allgemeinen die Ausführung der entsprechenden CAT-Kommandos.

Es ist die Aufgabe der vorliegenden Erfindung, eine Ausführung von CAT-Kommandos auf einem portablen Datenträger zu vereinfachen.

Diese Aufgabe wird durch ein Verfahren und einen portablen Datenträger mit den Merkmalen der unabhängigen Ansprüche gelöst. Vorteilhafte Ausgestaltungen und Weiterbildungen sind in den abhängigen Ansprüchen angegeben.

Bei dem erfindungsgemäßen Verfahren auf einem portablen Datenträger empfängt ein Webserver des Datenträgers eine Kommandoinformation von einem mit dem Datenträger verbundenen Endgerät, wobei die Kommandoinformation zumindest ein CAT-Kommando betrifft. Das zumindest eine CAT-Kommando wird dann von einem CAT-Interpreter des Datenträgers ausgeführt. Erfingdungsgemäß ist die Kommandoinformation in eine HTTP-Kommandoanfragenachricht eines HTTP-Clients des Endgeräts eingebettet und der Webserver extrahiert die eingebettete Kommandoinformation aus der HTTP-Kommandoanfragenachricht, bevor er sie an den CAT-Interpreter des Datenträgers zum Ausführen des zumindest einen CAT-Kommandos weiterleitet.

Ein erfindungsgemäßer portabler Datenträger umfasst dementsprechend eine Kommunikationsschnittstelle, einen Speicher und einen Prozessor sowie eine Webserverapplikation und eine CAT-Interpreterapplikation. Die Webserverapplikation ist eingerichtet, eine zumindest ein CAT-Kommando betreffende Kommandoinformation eines mit dem Datenträger über die Kommunikationsschnittstelle verbindbaren Endgeräts zu empfangen und die CAT-Interpreterapplikation ist eingerichtet, das zumindest eine CAT-Kommando auszuführen. Ferner ist die Webserverapplikation eingerichtet, eine in eine von einem HTTP-Client des Endgeräts empfangene HTTP-Kommandoanfragenachricht eingebettete Kommandoinformation aus der HTTP-Kommandoanfragenachricht zu extrahieren und an die CAT-Interpreterapplikation weiterzuleiten.

Auf diese Weise können CAT-Kommandos, insbesondere aus HTMLbasierten Anwendungen heraus, ohne die Verwendung einer speziell für diese Zwecke programmierten Ausführungsapplikation, wie z.B. einem Java-Servlet, zur Ausführung gebracht werden. Das Veranlassen der Ausführung der CAT-Kommandos erfolgt durch die HTTP-Kommandoanfragenachricht flexibel steuerbar und mit sehr geringem Ressourcenverbrauch auf dem Datenträger, da es keiner Ausführungsapplikation bedarf, die zusätzlich Speicherplatz und Laufzeit benötigt. Entsprechend kann die erfindungsgemäße Lösung auch auf solchen Datenträgern verwirklicht werden, die keine Java-Laufzeitumgebung oder entsprechende Interpreterplattformen umfassen.

Bevorzugt ist der Datenträger als (U)SIM-Mobilfunkkarte ausgebildet, der über die Kommunikationsschnittstelle mit einem Telekommunikationsendgerät verbunden ist. Das Telekommunikationsendgerät umfasst einen Webbrowser, der als HTTP-Client die Kommandoinformation an den Webserver des Datenträgers sendet. Einem Nutzer des Telekommunikationsendgeräts wird mit dem Verfahren eine komfortable Nutzung der (U)SIM Applikation Toolkit Kommandos über den Webbrowsers des Telekommunikationsendgeräts ermöglicht.

Zum Extrahieren der Kommandoinformation aus der empfangenen HTTP-Kommandoanfragenachricht identifiziert die Webserverapplikation zunächst die Kommandoinformation innerhalb der HTTP-Kommandoanfragenachricht. Gemäß einer Ausführungsform des Verfahrens identifiziert die Webserverapplikation in der HTTP-Kommandoanfragenachricht als Kommandoinformation zumindest ein CAT-Kommando, welches z.B. in den Nachrichtenteil eines HTTP-Kommandos - z.B. eines "POST"-Kommandos- als Textnachricht eingebettet ist. Derart übertragene CAT-Kommandos sind für die Webserverapplikation leicht zu identifizieren, z.B. anhand der speziellen Syntax der CAT-Kommandos.

Gemäß einer weiteren Ausführungsform ist in die HTTP-Kommandoanfragenachricht ein Verweis auf eine Datei eingebettet, welche ihrerseits zumindest ein CAT-Kommando umfasst. Die Webserverapplikation ist eingerichtet, derartige Verweise zu identifizieren und aus der HTTP-Kommandoanfragenachricht zu extrahieren.

Die Webserverapplikation kann eingerichtet sein, von dem CAT-Interpreter nach der Ausführung des zumindest einen CAT-Kommandos eine Kommandoantwortinformation zu empfangen, die die Ausführung des zumindest einen CAT-Kommandos betrifft. Eine solche Kommandoantwortinformation kann z.B. eine Statusinformation, ein Ergebnis einer Berechnung, einen eine Anfrage betreffenden Antworttext, eine Fehlermeldung oder dergleichen umfassen. Die Webserverapplikation ist dann weiterhin eingerichtet, eine HTTP-Kommandoantwortnachricht, welche die Kommandoantwortinformation umfasst, an den HTTP-Client des Endgeräts als Antwort auf die HTTP-Kommandoanfragenachricht zu senden. Auf diese Weise kann das Verfahren für eine vollständig HTML-basierte Interaktion eines Nutzers des Endgeräts mit einer Applikation des Datenträgers, welche CAT-Kommandos verwendet, benutzt werden.

Eine solche Anwendung kann beispielsweise das Beschaffen einer bestimmten Information, z.B. eines speziellen Börsenkurses oder dergleichen, mittels einer SMS-Anfrage bei einem Hintergrundsystem unterstützen. Die Kommandoinformation betrifft in diesem Fall dasjenige CAT-Kommando, welches das Senden der SMS-Anfrage veranlasst. Die SMS-Antwort des Hintergrundsystems wird von dem CAT-Interpreter als Kommandoantwortinformation an die Webserverapplikation weitergeleitet. Die Webserverapplikation bettet ihrerseits die SMS-Antwort in die HTTP-Kommandoantwortnachricht an den HTTP-Client des Endgeräts ein und sendet die derart aufgebaute HTTP-Kommandoantwortnachricht gemäß dem HTTP-Kommunikationsprotokoll an den HTTP-Client des Endgeräts.

Gemäß einer Ausgestaltung kann die in die HTTP-Kommandoanfragenachricht eingebettete Kommandoinformation ein CAT-Kommando betreffen, welches bei der Ausführung das Auslesen einer definierten Datei veranlasst. In dieser Datei kann beispielsweise eine zuvor von dem Datenträger empfangene SMS-Nachricht gespeichert sein. Die Webserverapplikation empfängt von dem CAT-Interpreter als Kommandoantwortinformation den Inhalt der SMS-Nachricht und bettet diese, wie vorstehend beschrieben, in die HTTP-Kommandoantwortnachricht ein.

Vorzugsweise erfolgt die Datenkommunikation zwischen dem Datenträger und dem Endgerät auf der Transportschicht (vgl. ISO/OSI-Referenzmodell), also unterhalb der Anwendungsschicht, auf welcher, wie beschrieben, das HTTP-Kommunikationsprotokoll verwendet wird, gemäß dem Bearer Independent Protocol (BIP), welches in der ETSI TS 102 223 spezifiziert ist. Der Datenträger muss also keinen vollständigen Internetprotokollstapel unterstützen, sondern lediglich ein Übertragungsprotokoll für die unteren, hardwarenahen Schichten, z.B. das T=0 Protokoll, sowie das BIP und das HTTP-Kommunikationsprotokoll. Auch auf diese Weise können Ressourcen des Datenträgers eingespart werden bzw. eher ressourcenschwachen Datenträgern die Ausführung des Verfahrens ermöglicht werden.

Die Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: an einer ersten Ausführungsform des erfindungsgemäßen Verfahrens beteiligte Komponenten und dabei auszuführende Schritte;
- Figur 3: an einer zweiten Ausführungsform beteiligte Komponenten und dazugehörige Schritte;
- Figur 4: an einer dritten Ausführungsform beteiligte Komponenten und dabei durchzuführende Schritte; und
- Figur 5: an einer vierten Ausführungsform beteiligte Komponenten und dabei auszuführende Schritte.

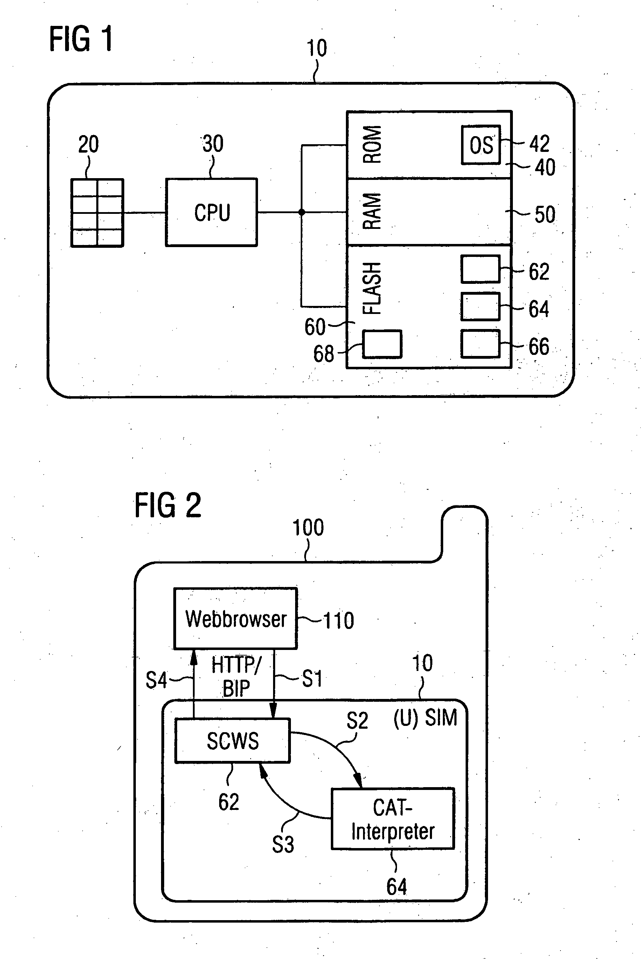

Mit Bezug auf Figur 1 umfasst der hier als (U)SIM-Mobilfunkkarte ausgebildete portable Datenträger 10 eine Kommunikationsschnittstelle 20, einen Prozessor (CPU) 30 und verschiedene Speicher 40, 50 und 60.

Die Kommunikationsschnittstelle 20 ist als Kontaktfeld gemäß ISO/IEC 7816 ausgebildet. Dadurch wird eine Datenkommunikation zwischen der (U)SIM-Mobilfunkkarte 10 und einem über die Kommunikationsschnittstelle 20 mit der (U)SIM-Mobilfunkkarte 10 verbundenen Endgerät, beispielsweise gemäß dem T=0 oder dem USB-Kommunikationsprotokoll, ermöglicht. Die Kommunikationsschnittstelle 20 kann jedoch auch anders ausgebildet sein, beispielsweise nach dem SD-Standard. Alternativ oder zusätzlich kann die

(U)SIM-Mobilfunkkarte 10 eine Kontaktlosschnittstelle, z.B. in Form einer Antennenspule (nicht gezeigt), umfassen.

In dem nichtflüchtigen, nicht wiederbeschreibbaren ROM-Speicher 40 ist ein die (U)SIM-Mobilfunkkarte 10 steuerndes Betriebssystem (OS) 42 gespeichert. Spezielle Betriebssystemroutinen implementieren die von der (U)SIM-Mobilfunkkarte 10 unterstützten Kommunikationsprotokolle. Dies sind auf der hardwarenahen Netzwerkzugangsschicht insbesondere das T=0 oder T=1 Protokoll, auf der Verbindungs- und Transportschicht das Bearer Independent Protocol (BIP) und auf der Anwendungsschicht das HTTP-Kommunikationsprotokoll. Es ist auch möglich, dass die (U)SIM-Mobilfunkkarte 10 alternative oder zusätzliche Komnnunikationsprotokolle, wie z.B. das USB-Protokoll, unterstützt oder einen vollständigen Internetptotokollstapel umfasst. Ein flüchtiger, wiederbeschreibbarer RAM-Speicher 50 dient der (U)SIM-Mobilfunkkarte 10 als Arbeitsspeicher und ein nichtflüchtiger, wiederbeschreibbarer FLASH-Speicher 60 dient zum Speichern von Applikationen und Daten, wie z.B. einer Webserverapplikation 62 und einer CAT-Interpreterapplikation 64 sowie von Dateien 66 und 68.

Die Webserverapplikation 62 ist eingerichtet, einem HTTP-Client, z.B. einem Webbrowser 110 (Fig. 2 bis 5) eines mit der (U)SIM-Mobilfunkkarte 10 über die Kommunikationsschnittstelle 20 verbundenen Telekommunikationsendgeräts 100 (Fig. 2 bis 5) auf Anforderung Inhalte, z.B. in Form von HTML-Dokumenten, bereitzustellen, sowie Daten von dem HTTP-Client zu empfangen, wobei eine entsprechende Datenkommunikation auf der Anwendungsschicht in der Regel gemäß dem HTTP-Kommunikationsprotokoll durchgeführt wird. Die CAT-Interpreterapplikation 64 ist eingerichtet, CAT-Kommandos auszuführen. Die beiden Applikationen sowie die Datensätze in den Dateien 66 und 68 werden nachfolgend mit Bezug auf die Figuren 2 bis 5 näher beschrieben werden.

In Fig. 2 ist eine erste Ausführungsform eines Verfahrens zum Ausführen eines CAT-Kommandos durch einen CAT-Interpreter 64 auf der (U)SIM-Mobilfunkkarte 10 schematisch dargestellt. Die (U)SIM-Mobilfunkkarte 10 ist über die Kommunikationsschnittstelle 20 mit dem Telekommunikationsendgerät 100 verbunden, auf welchem ein Webbrowser 110 ausgeführt wird. Auf der (U)SIM-Mobilfunkkarte 10 ist beispielsweise eine Telefonbuchapplikation implementiert, welche es einem Nutzer des Telekommunikationsendgeräts 100 erlaubt, ein als HTML-Dokument aufbereitetes Telefonbuch mittels des Webbrowsers 110 zu durchsuchen und gewünschte Nummern durch Anklicken derselben direkt anzuwählen. Andersartige Anwendungen sind gleichfalls möglich.

Als Folge eines solchen Anklickens eines Telefonbucheintrags sendet der Webbrowser 110 in einem ersten Schritt S1 eine HTTP-Kommandoanfragenachricht an die Webserverapplikation (SCWS) 62, welche als Kommandoinformation im Content-Feld eines entsprechenden HTTP-Kommandos, z.B. eines "POST"-Kommandos, ein CAT-Kommando als Textinformation umfasst, z.B. in der Form <SET UP CALL 123456 >. Die Webserverapplikation 62 analysiert das empfangene Kommando, z.B. mittels eines geeigneten Parsers, und identifiziert das in die HTTP-Kommandoanfragenachricht eingebettete CAT-Kommando, welches die Webserverapplikation 62 daraufhin aus der HTTP-Kommandoanfragenachricht extrahiert und in einem zweiten Schritt S2 an die CAT-Interpreterapplikation 64 weiterleitet. Es ist gleichfalls möglich, als Kommandoinformation mehrere CAT-Kommandos in die HTTP-Kommandoanfragenachricht einzubetten.

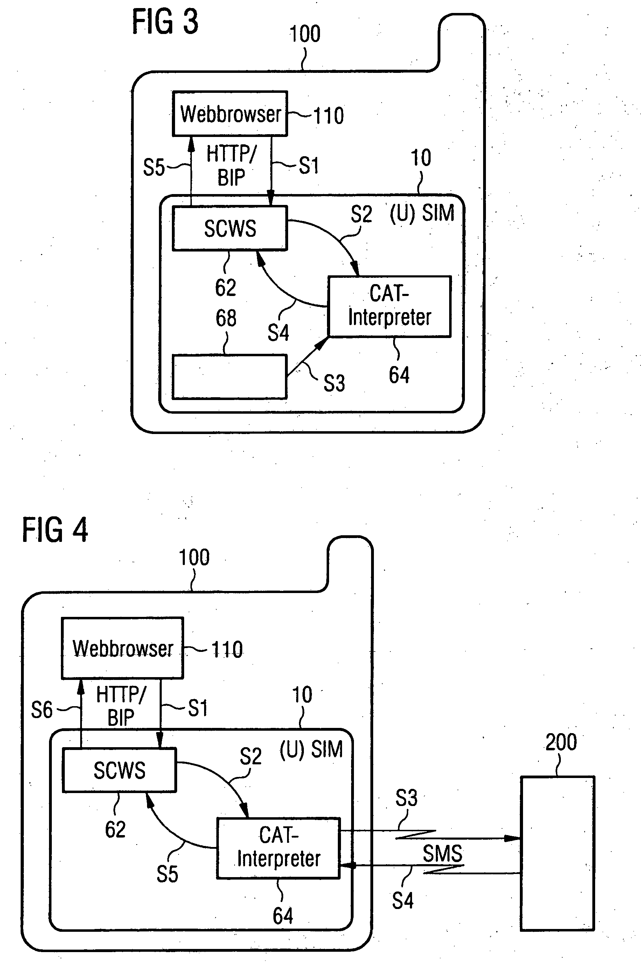

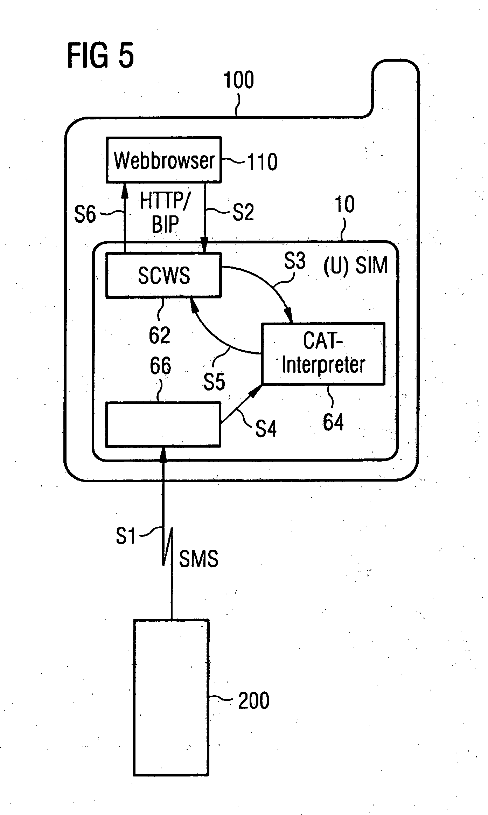

Die CAT-Interpreterapplikation 64 ist eingerichtet, das empfangene CAT-Kommando auszuführen, d.h. eine Sprachverbindung zu der angegebenen Nummer 123456 aufzubauen. Nachdem die CAT-Interpreterapplikation 64 das Kommando ausgeführt hat, sendet sie in Schritt S3 eine Kommandoantwortinformation an die Webserverapplikation 62, die besagt, dass das entsprechende Kommando ausgeführt worden ist, dass also ein Anwählen der entsprechenden Nummer erfolgt ist. Als Kommandoantwortinformation kann die CAT-Interpreterapplikation 64 beispielsweise auch eine Fehlermeldung zurückgeben, wenn ein Ausführen des entsprechenden Kommandos fehlgeschlagen ist. Weitere Formen von Kommandoantwortinformationen werden mit Bezug auf die Figuren 4 und 5 beschrieben.

Die Webserverapplikation 62 empfängt die von der CAT-Interpreterapplikation 64 gesendete Kommandoantwortinformation und bettet diese in eine HTTP-Kommandoantwortnachricht ein, welche sie in Schritt S4 als Antwort auf die HTTP-Kommandoanfragenachricht an den Webbrowser 110 sendet. Der Nutzer des Telekommunikationsendgeräts 100 kann dann auf dem Webbrowser 110 beispielsweise ablesen, dass die gewünschte Nummer angewählt worden ist. Alternativ können die Schritte S3 und S4 entfallen, d.h. es gibt keine direkte Rückmeldung von der CAT-Interpreterapplikation 64 an den Webbrowser 110 über die Webserverapplikation 62. Es ist auch möglich, dass die Webserverapplikation 62 eine HTTP-Kommandoantwortnachricht an den Webbrowser 110 sendet, ohne eine Kommandoantwortinformation von der CAT-Interpreterapplikation 64 erhalten zu haben. Eine solche HTTP-Kommandoantwortnachricht kann beispielsweise die Information übermitteln, dass das mit der HTTP-Kommandoanfragenachricht empfangene CAT-Kommando an die CAT-Interpreterapplikation 64 weitergeleitet worden ist.

Figur 3 stellt schematisch eine zweite Ausführungsform des Verfahrens dar. Mittels dieser zweiten Ausführungsform kann genau der gleiche Effekt erzielt werden wie mit dem mit Bezug auf Figur 2 beschriebenen Verfahren. Lediglich die Art und Weise, wie der CAT-Interpreterapplikation 64 die Kommandoinformation betreffend das auszuführende CAT-Kommando weitergeleitet wird, unterscheidet das hier dargestellte Verfahren von dem in Figur 2. Die in Schritt S1 von dem Webbrowser 110 an die Webserverapplikation 62 gesendete HTTP-Kommandoanfragenachricht enthält nun anstatt eines expliziten CAT-Kommandos einen Verweis auf die Datei 68, in der das CAT-Kommando gespeichert ist. Die Webserverapplikation 62 identifiziert diesen speziellen Verweis, extrahiert ihn aus der HTTP-Kommandoanfragenachricht und leitet den Verweis im Schritt S2 weiter an die CAT-Interpreterapplikation 64, welche ihrerseits eingerichtet ist, das Kommando in Schritt S3 aus der Kommandodatei 68 auszulesen und auszuführen.

Diese Ausführungsform des Verfahrens eignet sich insbesondere dazu, mittels einer HTTP-Kommandoanfragenachricht das Ausführen einer Mehrzahl von CAT-Kommandos zu initiieren, die in einer entsprechend definierten Kommandodatei gespeichert sind, ohne jedes dieser Kommandos explizit und bei jeder gleich lautenden, sich eventuell wiederholenden HTTP-Kommandoanfragenachricht erneut in die HTTP-Kommandoanfragenachricht einbetten zu müssen. Beispielsweise kann ein Senden von SMS-Nachrichten an eine vorgegebene Verteilerliste auf diese Weise effizient durchgeführt werden. Die Schritte S4 und S5 entsprechen den Schritten S3 und S4 aus Figur 2 und werden nicht erneut beschrieben.

Eine weitere Ausführungsform des Verfahrens, die mit Bezug auf Fig. 4 dargestellt ist, gleicht in der prinzipiellen Vorgehensweise dem Verfahren aus Fig. 2. In Schritt S1 sendet der Webbrowser, wie vorstehend beschrieben, die HTTP-Kommandoanfragenachricht an die Webserverapplikation 62. Diese identifiziert und extrahiert das darin eingebettete CAT-Kommando und leitet es weiter an die CAT-Interpreterapplikation 64. In der Ausführungsform aus Fig. 4 löst das CAT-Kommando in Schritt S3 das Senden einer SMS-Anfragenachricht an ein Hintergrundsystem 200 aus. Mittels einer solchen SMS-Anfragenachricht kann der Nutzer des Telekommunikationsendgeräts 100 beispielsweise auf Informationsdienste zurückgreifen und gezielt Informationen, wie z.B. Börsenkurse, Sportergebnisse, Wetternachrichten und dergleichen anfordern.

Das Hintergrundsystem 200 sendet in Schritt S4 eine SMS-Antwortnachricht auf die SMS-Anfragenachricht an die (U)SIM-Mobilfunkkarte 10. Diese SMS-Antwortnachricht und eventuell bereits die SMS-Anfragenachricht können gemäß GSM 03.48 verschlüsselt zwischen dem Hintergrundsystem und der (U)SIM-Mobilfunkkarte 10 übertragen werden. Auf diese Weise kann auch das Übertragen von sensiblen Daten mittels des hier beschrieben Verfahrens durchgeführt werden.

Die SMS-Antwortnachricht, die die von dem Nutzer angeforderte Information enthält, wird von der CAT-Interpreterapplikation 64 in Schritt S5 an die Webserverapplikation 62 als Kommandoantwortinformation weitergeleitet.

Die Webserverapplikation 62 bettet die derart erhaltene SMS-Antwortnachricht in eine HTTP-Kommandoantwortnachricht ein und sendet diese in Schritt S6 an den Webbrowser 110 des Telekommunikationsendgeräts 100. Der Nutzer des Telekommunikationsendgeräts 100 kann den Inhalt der SMS-Antwortnachricht daraufhin auf dem Webbrowser 110 als HTML-Dokument betrachten.

In Figur 5 ist eine weitere Ausführungsform des Verfahrens illustriert. Im Gegensatz zu dem in Figur 4 beschriebenen Verfahren sendet der Webbrowser 110 in Schritt S2 mittels der HTTP-Kommandoanfragenachricht ein CAT-Kommando an die Webserverapplikation 62, welches nach einer Extraktion und Weiterleitung an die CAT-Interpreterapplikation 64 diese veranlasst, eine in einer Datei 66 gespeicherte SMS-Nachricht auszulesen. Diese SMS-Nachricht ist von der (U)SIM-Mobilfunkkarte 10 in einem vorhergehenden Schritt S1 empfangen und in der Datei 66 gespeichert worden. Der Inhalt der ausgelesenen SMS-Nachricht wird von der CAT-Interpreterapplikation 64 in Schritt S5 als Kommandoinformation an die Webserverapplikation 62 gesendet, welche in Schritt S6 analog zu der Ausführungsform aus Fig. 4 operiert.

In einer speziellen Ausgestaltung dieser Ausführungsform können die Schritte S2 und S3 entfallen, wenn die (U)SIM-Mobilfunkkarte 10 eine so genannte Push-SMS-Nachricht empfängt. Eine Push-SMS-Nachricht wird von der (U)SIM-Mobilfunkkarte in der Regel direkt bearbeitet und dem Nutzer angezeigt. Die CAT-Interpreterapplikation 64 veranlasst mittels eines speziellen CAT-Kommandos, "LAUNCH BROWSER", das Starten des Webbrowsers 110 des Telekommunikationsendgeräts 100 und leitet erst dann den Inhalt der erhaltenen Push-SMS-Nachricht an die Webserverapplikation 62 weiter. Diese verfährt damit wie in den mit Bezug auf die Figuren 4 und 5 beschriebenen Ausführungsformen, worauf die Push-SMS-Nachricht dem Nutzer des Telekommunikationsendgeräts 100 direkt und ohne Aufforderung von dessen Seite als optisch ansprechendes HTML-Dokument auf dem Webbrowser 110 angezeigt wird.

Wie in den Figuren 2 bis 5 dargestellt, wird die Datenübertragung zwischen der (U)SIM-Mobilfunkkarte 10 und dem Telekommunikationsendgerät 100 auf der Transportschicht gemäß dem Bearer Independent Protocol (BIP) durchgeführt. Die (U)SIM-Mobilfunkkarte 10 umfasst in der Regel keinen kompletten Internetprotokollstapel und keine Java-Laufzeitumgebung. Die Webserverapplikation 62 stellt dem Webbrowser 110 neben statischen Inhalten, die in dem Speicher 60 gespeichert sind, nur solche Inhalte bereit, die aufgrund der ausgeführten CAT-Kommandos dynamisch generierte Inhalte umfassen. Demgemäß können die vorstehend beschriebenen Verfahren auch mittels ressourcenbeschränkter Datenträger bzw. unter minimalem Ressourcenverbrauch durchgeführt werden.

## Patentansprüche

1. Verfahren auf einem portablen Datenträger (10), umfassend die Schritte:
- Empfangen einer Kommandoinformation von einem Endgerät (100), welche zumindest ein Card Application Toolkit, CAT, -Kommando betrifft, durch den Datenträger (10);
- Ausführen des zumindest einen CAT-Kommandos durch einen CAT-Interpreter (64) des Datenträgers (10);
wobei die Kommandoinformation in eine HTTP-Kommandoanfragenachricht eines HTTP-Clients (110) des Endgeräts (100) eingebettet ist, und
wobei die empfangene Kommandoinformation aus der HTTP-Kommandoanfragenachricht extrahiert wird;
wobei das Verfahren **dadurch gekennzeichnet ist,**
**dass** die Kommandoinformation an den CAT-Interpreter (64) des Datenträgers (10) zum Ausführen des zumindest einen CAT-Kommandos weitergeleitet wird;
**dass** die Schritte des Empfangens, des Extrahierens und des Weiterleitens in dem tragbaren Datenträger durch einen Webserver (62) des tragbaren Datenträgers ausgeführt werden, und
**dass** der Webserver (62) die Kommandoinformation in der HTTP-Kommandoanfragenachricht identifiziert,
wobei der Webserver (62) in der HTTP-Kommandoanfragenachricht zumindest ein CAT-Kommando als Kommandoinformation identifiziert.

2. Verfahren nach Anspruch 1, **dadurch gekennzeichnet, dass** die Kommandoinformation in einem für den CAT-Interpreter geeigneten Format empfangen wird und die empfangene Kommandoinformation nach dem Extrahieren unverändert an den CAT-Interpreter weitergeleitet wird.

3. Verfahren nach einem der Ansprüche 1 bis 2, **gekennzeichnet durch** die weiteren Schritte:
- Empfangen einer Kommandoantwortinformation von dem CAT-Interpreter (64) **durch** den Webserver (62), welche eine die Ausführung des zumindest einen CAT-Kommandos betreffende Antwortinformation umfasst;
- Senden einer HTTP-Kommandoantwortnachricht **durch** den Webserver (62) an den HTTP-Client (110) des Endgeräts (100), welche die Antwortinformation umfasst.

4. Verfahren nach Anspruch 3, **dadurch gekennzeichnet, dass** durch das Ausführen des zumindest einen CAT-Kommandos das Senden einer SMS-Anfragenachricht durch den Datenträger (10) an ein Hintergrundsystem (200) veranlasst wird und dass der Webserver (62) in die HTTP-Kommandoantwortnachricht eine von dem Datenträger (10) empfangene SMS-Antwortnachricht des Hintergrundsystems (200) auf die SMS-Anfragenachricht als Kommandoantwortinformation des CAT-Interpreters (64) einbettet.

5. Verfahren nach Anspruch 3, **dadurch gekennzeichnet, dass** durch das Ausführen des zumindest einen CAT-Kommandos das Auslesen einer auf dem Datenträgers (10) vorliegenden Datei (66) veranlasst wird, in welcher eine von dem Datenträger (10) empfangene SMS-Nachricht gespeichert ist, und dass der Webserver (62) in die HTTP-Kommandoantwortnachricht die ausgelesene SMS-Nachricht als die Kommandoantwortinformation des CAT-Interpreters (64) einbettet.

6. Verfahren nach einem der Ansprüche 1 bis 5, **dadurch gekennzeichnet, dass** die Datenkommunikation zwischen dem Datenträger (10) und dem Endgerät (100) auf der Transportschicht gemäß dem Bearer Independent Protocol (BIP) durchgeführt wird.

7. Verfahren nach einem der Ansprüche 1 bis 6, **dadurch gekennzeichnet, dass** der Datenträger (10) als (U)SIM-Mobilfunkkarte mit einem Telekommunikationsendgerät verbunden wird und der Webserver (62) des Datenträgers (10) die HTTP-Kommandoanfragenachricht von einem Webbrowser des Telekommunikationsendgeräts empfängt.

8. Portabler Datenträger (10), umfassend eine Kommunikationsschnittstelle (20), einen Speicher (60) und einen Prozessor (30) sowie eine Webserverapplikation (62) und eine Card Application Toolkit, CAT, - Interpreterapplikation (64), wobei die Webserverapplikation (62) eingerichtet ist, eine zumindest ein CAT-Kommando betreffende Kommandoinformation eines mit dem Datenträger (10) über die Kommunikationsschnittstelle (20) verbindbaren Endgeräts (100) zu empfangen, wobei die Kommandoinformation in eine HTTP-Kommandoanfragenachricht eines HTTP-Clients (110) des Endgeräts (100) eingebettet ist, und die CAT-Interpreterapplikation (64) eingerichtet ist, das zumindest eine CAT-Kommando auszuführen, wobei die Webser-verapplikation (62) eingerichtet ist, die eingebettete Kommandoinformation aus der empfangenen HTTP-Kommandoanfragenachricht zu identifizieren, zu extrahieren und an die CAT-Interpreterapplikation (64) weiterzuleiten, wobei die Webserverapplikation (62) in der HTTP-Kommandoanfragenachricht zumindest ein CAT-Kommando als Kommandoinformation identifiziert.

9. Datenträger (10) nach Anspruch 8, wobei der Datenträger (10) zum Durchführen eines Verfahrens nach einem der Ansprüche 2 bis 7 eingerichtet ist.

10. Datenträger (10) nach einem der Ansprüche 8 bis 9, wobei der Datenträger (10) das Bearer Independent Protocol (BIP) H unterstützt und eingerichtet ist, mit dem Endgerät (100) auf der Transportschicht gemäß dem Bearer Independent Protocol (BIP) zu kommunizieren.

11. Datenträger (10) nach einem der Ansprüche 8 bis 10, wobei der Datenträger (10) als (U)SIM-Mobilfunkkarte ausgebildet ist, der über die Kommunikationsschnittstelle (20) mit einem Telekommunikationsendgerät verbindbar ist.

## Claims

1. A method on a portable data carrier (10), comprising the steps of:
- receiving by the data carrier (10) of a command information from a terminal (100) concerning at least one card application toolkit, CAT command;
- executing by a CAT interpreter (64) of the data carrier (10) of the at least one CAT command;
wherein the command information is embedded in an HTTP command request message of an HTTP client (110) of the terminal (100), and wherein the received command information is extracted from the HTTP command request message,
wherein the method is **characterized in that**
the command information is forwarded to the CAT interpreter (64) of the data carrier (10) for executing the at least one CAT command;
the steps of receiving, extracting and forwarding are executed in the portable data carrier by a web server (62) of the portable data carrier, and
the web server (62) identifies the command information in the HTTP command request message,
wherein the web server (62) identifies at least one CAT command as command information in the HTTP command request message.

2. The method according to claim 1, **characterized in that** the command information is received in a format that is suitable for the CAT interpreter and the received command information is forwarded in unchanged form to the CAT interpreter after extraction.

3. The method according to any of the claims 1 to 2, **characterized by** the further steps of:
- receiving by the web server (62) of a command response information from the CAT interpreter (64), said information comprising a response information concerning the execution of the at least one CAT command;
- sending by the web server (62) of an HTTP command response message to the HTTP client (110) of the terminal (100), said message comprising the response information.

4. The method according to claim 3, **characterized in that** by executing the at least one CAT command, there is prompted the sending of an SMS request message by the data carrier (10) to a background system (200), and that the web server (62) embeds in the HTTP command response message, as command response information of the CAT interpreter (64), an SMS response message of the background system (200) to the SMS request message, said SMS response message having been received by the data carrier (10).

5. The method according to claim 3, **characterized in that** by executing the at least one CAT command, there is prompted the readout of a file (66) present on the data carrier (10), with an SMS message received by the data carrier (10) being stored in said file, and that the web server (62) embeds in the HTTP command response message the read-out SMS message as the command response information of the CAT interpreter (64).

6. The method according to any of the claims 1 to 5, **characterized in that** the data communication between the data carrier (10) and the terminal (100) on the transport layer is performed according to the bearer independent protocol (BIP).

7. The method according to any of the claims 1 to 6, **characterized in that** the data carrier (10) is connected as (U)SIM mobile communication card with a telecommunication terminal; and the web server (62) of the data carrier (10) receives the HTTP command request message from a web browser of the telecommunication terminal.

8. A portable data carrier (10), comprising a communication interface (20), a memory (60) and a processor (30), as well as a web server application (62) and a card application toolkit, CAT interpreter application (64), wherein the web server application (62) is adapted to receive a command information concerning at least one CAT command of a terminal (100) connectible to the data carrier (10) via the communication interface (20), wherein the command information is embedded in an HTTP command request message of an HTTP client (110) of the terminal (100), and the CAT interpreter application (64) is adapted to execute the at least one CAT command, wherein the web server application (62) is adapted to identify the embedded command information from the received HTTP command request message, to extract it and forward it to the CAT interpreter application (64), wherein the web server application (62) identifies at least one CAT command in the HTTP command request message as command information.

9. The data carrier (10) according to claim 8, wherein the data carrier (10) is adapted to perform a method according to any of the claims 2 to 7.

10. The data carrier (10) according to any of the claims 8 to 9, wherein the data carrier (10) supports the bearer independent protocol (BIP) and is adapted to communicate with the terminal (100) on the transport layer according to the bearer independent protocol (BIP).

11. The data carrier (10) according to any of the claims 8 to 10, wherein the data carrier (10) is configured as a (U)SIM mobile communication card which can be connected with a telecommunication terminal via the communication interface (20).

## Revendications

1. Procédé sur un support de données portable (10), comprenant les étapes :
- réception d'une information de commande provenant d'un terminal (100), laquelle concerne au moins une commande Card Application Toolkit, CAT, par le support de données (10),
- exécution de la au moins une commande CAT par un interpréteur CAT (64) du support de données (10);
l'information de commande étant intégrée dans un message de demande de commande HTTP d'un client HTTP (110) du terminal (100), cependant que
l'information de commande reçue est extraite du message de demande de commande HTTP,
le procédé étant **caractérisé en ce**
**que** l'information de commande est transférée à l'interpréteur CAT (64) du support de données (10) afin d'exécuter la au moins une commande CAT;
**que** les étapes de la réception, de l'extraction et du transfert sont exécutées dans le support de données portable par un serveur Web (62) du support de données portable, et
**que** le serveur Web (62) identifie l'information de commande dans le message de demande de commande HTTP,
le serveur Web (62) identifiant dans le message de demande de commande HTTP au moins une commande CAT en tant qu'information de commande.

2. Procédé selon la revendication 1, **caractérisé en ce que** l'information de commande est reçue dans un format adapté à l'interpréteur CAT (64) et **en ce que** l'information de commande reçue est transférée après l'extraction de façon inchangée à l'interpréteur CAT.

3. Procédé selon une des revendications de 1 à 2, **caractérisé par** les étapes supplémentaires:
- réception, par le serveur Web (62), d'une information de réponse à la commande provenant de l'interpréteur CAT (64) et comprenant une information de réponse concernant l'exécution de la au moins une commande CAT;
- envoi d'un message de réponse à la commande HTTP par le serveur Web (62) au client HTTP (110) du terminal (100), ledit message comprenant l'information de réponse.

4. Procédé selon la revendication 3, **caractérisé en ce que**, par l'exécution de la au moins une commande CAT, l'envoi d'un message de demande SMS par le support de données (10) à un système d'arrière-plan (200) est déclenché, et **en ce que** le serveur Web (62) intègre dans le message de réponse à la commande HTTP, en tant qu'information de réponse à la commande provenant de l'interpréteur CAT (64), un message de réponse SMS, reçu par le support de données (10) et provenant du système d'arrière-plan (200), au message de demande SMS.

5. Procédé selon la revendication 3, **caractérisé en ce que**, par l'exécution de la au moins une commande CAT, la lecture d'un fichier (66) se trouvant sur le support de données (10) et dans lequel est mémorisé un message SMS reçu par le support de données (10) est déclenchée, et **en ce que** le serveur Web (62) intègre dans le message de réponse à la commande HTTP, en tant que l'information de réponse à la commande provenant de l'interpréteur CAT (64), le message SMS lu.

6. Procédé selon une des revendications de 1 à 5, **caractérisé en ce que** la communication de données entre le support de données (10) et le terminal (100) est exécutée sur la couche de transport suivant le protocole Bearer Independent (BIP).

7. Procédé selon une des revendications de 1 à 6, **caractérisé en ce que** le support de données (10) est relié en tant que carte de téléphonie mobile (U)SIM à un terminal de télécommunication et **en ce que** le serveur Web (62) du support de données (10) reçoit le message de demande de commande HTTP de la part d'un navigateur Web du terminal de télécommunication.

8. Support de données portable (10), comprenant une interface de communication (20), une mémoire (60) et un processeur (30) ainsi qu'une application de serveur Web (62) et une application d'interpréteur Card Application Toolkit, CAT (64), l'application de serveur Web (62) étant configurée pour recevoir une information de commande concernant au moins une commande CAT provenant d'un terminal (100) pouvant être relié avec le support de données (10) par l'intermédiaire de l'interface de communication (20), l'information de commande étant intégrée dans un message de demande de commande HTTP d'un client HTTP (110) du terminal (100), et l'application d'interpréteur CAT (64) étant configurée pour exécuter la au moins une commande CAT, l'application de serveur Web (62) étant configurée pour identifier et pour extraire à partir du message de demande de commande HTTP reçu l'information de commande intégrée et pour la transférer à l'application d'interpréteur CAT (64), l'application de serveur Web (62) identifiant dans le message de demande de commande HTTP au moins une commande CAT en tant qu'information de commande.

9. Support de données (10) selon la revendication 8, le support de données (10) étant configuré pour exécuter un procédé selon une des revendications de 2 à 7.

10. Support de données (10) selon une des revendications de 8 à 9, le support de données (10) prenant en charge le protocole Bearer Independent (BIP) et étant configuré pour communiquer avec le terminal (100) sur la couche de transport suivant le protocole Bearer Independent (BIP).

11. Support de données (10) selon une des revendications de 8 à 10, le support de données (10) étant réalisé sous forme de carte de téléphonie mobile (U)SIM qui est reliée par l'intermédiaire de l'interface de communication (20) à un terminal de télécommunication.
